## Europäisches Patentamt

## European Patent Office

## Office européen des brevets

(19)

(11) Publication number: **0 234 621**
**B1**

## EUROPEAN PATENT SPECIFICATION

(12)

(45) Date of publication of the patent specification:
13.12.89

(51) Int. Cl.⁴: **B29C 49/22**

(21) Application number: **87200142.5**

(22) Date of filing: **30.01.87**

(54) Process for the preparation of a hollow object from a multilayer plastic.

(30) Priority: **01.02.86 NL 8600251**

(43) Date of publication of application:
**02.09.87 Bulletin 87/36**

(45) Publication of the grant of the patent:
**13.12.89 Bulletin 89/50**

(84) Designated Contracting States:
**AT BE CH DE ES FR GB IT LI NL SE**

(56) References cited:
**FR-A- 1 505 492**
**FR-A- 2 119 200**
**GB-A- 1 227 083**
**US-A- 3 113 831**
**US-A- 3 275 726**
**US-A- 4 015 033**

(73) Proprietor: **STAMICARBON B.V., Mijnweg 1, NL-6167 AC Geleen(NL)**

(72) Inventor: **Le Doux, George Fernand Joseph, St. Bernardusstraat 14, NL-6211 HL Maastricht(NL)**
Inventor: **Geesink, Johannes Hendrik, Groenenweg 10, NL-6365 AR Schinnen(NL)**

## Description

The invention relates to a process for the preparation of a hollow object from a multilayer plastic in which an inner and an outer layer, one of which is in the melt phase, are introduced into an opened mould and are after closing of the mould forced against the mould wall by a pressurized medium.

Such a process is known from Japanese patent publication 45-39189. In the known process the inner and the outer layer are introduced into an opened mould, uoon which the mould is closed and first the inner layer is forced against the outer layer by means of a pressurized medium and subsequently the layers are together forced against the interior mould wall.

In non-shaped condition the outer layer need not fully enclose the inner layer, as is the case, for instance, when a cylindrical inner layer, for intance a rounded film or a film extruded in that shape, and two flat or curved films are placed in the open mould opposite each other and on either side of the inner layer.

In the known process it is quite possible for the air between the layers to be trapped at least in part between the compressed layers, which in a number of applications of products obtained by the process is a serious technical disadvantage.

Also FR-A 2 119 200 describes such a process. If refers to coextrusion wherein both the inner and the outer layer are extruded and hence are molten. The bottoms of both layers are seperately closed. First the bottom of the inner layer is closed, then the outer is introduced. the bottom of the outer layer is closid only after the inner layer has been blown up during its descent.

This process requires very complicated machines, especially when one of the layers should be a multilayer. Both layers adhere badly, which is the reason that the bottoms of both layers are closed seperately. Because of the bad adherence between both layers the resulting flask is not suitable for containing chemical substances like hydrocarbons, petrol, etc.

The object of the invention is to provide a process in which said disadvantages do not occur, or at least not to an obstructive degree.

The process according to the invention is characterized in that the layers are contacted with each other over almost the entire area of their facing surfaces and are sealed together prior to the mould being closed. As the layers ar first sealed together in the pro cess according to the invention and are only then formed further in the closed mould, it is prevented that locally folds, air inclusions and/or a qualitatively poor seal are obtained. If desired, one of the layers can be perforated, i.e. provided with small holes more or less evenly distributed over the surface, so that in those cases where inclusion of air between the two layers cannot be prevented completely satisfactorily, the air can be expelled through the perforations and the desired result can be obtained, with a good seal. The total area of the perforations should be as small as possible and will generally be not more than 1 % of the total area and preferably considerably less.

The process according to the invention can be applied in the preparation of hollow objects having a wall consisting of two or more layers. These layers may all be of different plastics, but this is not necessary.

An embodiment of the process according to the invention is characterized in that the layers, before being contacted, are compressed near an extreme edge thereof, and subsequently the inner layer is forced against the outer layer by means of a pressurized medium. As pressurized medium usually air is used. It will be clear that any other medium is equally applicable. Therefore, wherever in this description air is mentioned, this is considered to include all other gaseous media. By this compression it is achieved that the layers begin to seal together from the edge where they are compressed, so that the air is effectively expelled starting on one side.

Another embodiment of the process according to the invention is characterized in that at least one of the layers is introduced into the opened mould in the form of an extruded tube in the melt phase. This has the advantage that the heat required for sealing is derived from this layer in the melt phase, so that no external heat need be supplied. A conventional extruder suff ices.

Yet another embodiment of the process according to the invention is characterized in that at least one of the layers is introduced into the opened mould in the form of multilayer film. This has the advantage that the choice of materials of which the multilayer film may consist yields great flexibility as regards properties of the product obtained, and no complicated machinery is required.

Another embodiment of the process according to the invention is characterized in that the inner layer is introduced into the opened mould in the form of a balloon-shaped film and the volume of the balloon is reduced before the outer layer is introduced into the mould. The advantage of this embodiment of the process according to the invention is that on the inner side of the hollow object a layer can be provided that has certain properties as required for a specific application.

The latter two embodiments are of advantage especially when the final product is to satisfy demands as regards the permeability to gases or vapours and/or the mechanical properties. In view of this, these embodiments are particularly suitable for the manufacture of containers for storing chemical substances, such as solvents, and also for the manufacture of technical products, such as petrol tanks. For such applications, where it is important that the permeability is as low as possible, it may be advantageous if at least one layer consists of a film having barrier properties or includes such a film. Films with barrier properties are generally known and need not be described in detail. Anyone with average skill in the art can easily make an appropriate choice from the many known films with barrier properties. The presence of absence of a film with barrier properties is not a characteristic of the present invention, and therefore the use of any conceivable film with barrier properties in the present process is within the scope of the invention.

In principle all polymer plastics can be used in the process according to the invention, optionally use being made of a tackifier to obtain a proper seal.

Particularly suitable plastics are, for instance, for one layer HDPE or LLDPE, in combination with another layer consisting of a multilayer film built up of: HDPE-Plexar-Nylon 6-Plexar-HDPE, or of: HDPE-Surlyn-Polyester-Surlyn-HDPE. In the multilayer film use may also be made of LLDPE instead of HDPE, while Polyester may be replaced by: Eval, Nylon-Eval blends, Nylon 6.12 and copolymers of said substances. The invention is by no means limited to the plastics listed.

The process according to the invention will subsequently be elucidated on the basis of a number of figures, of course without being restricted thereto.

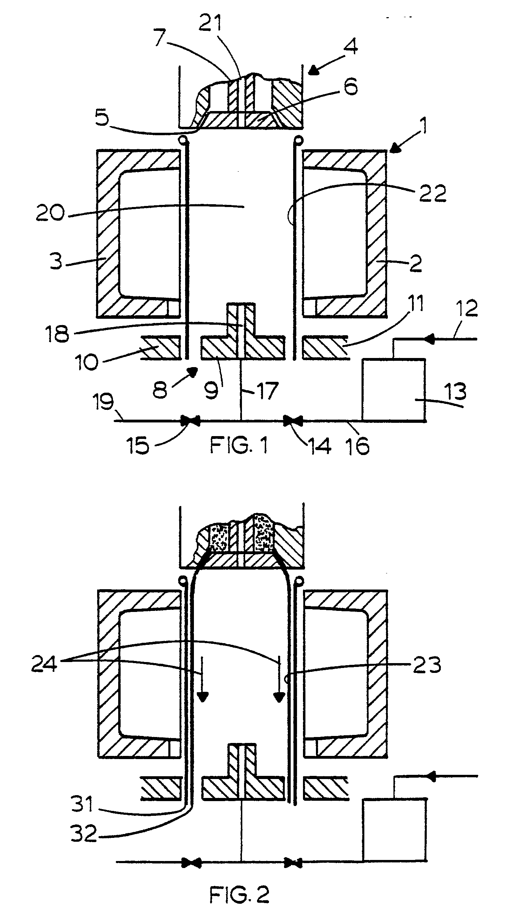

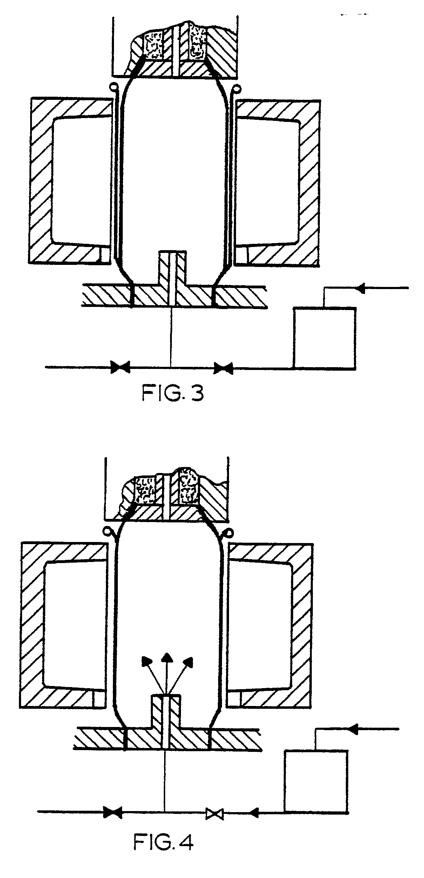

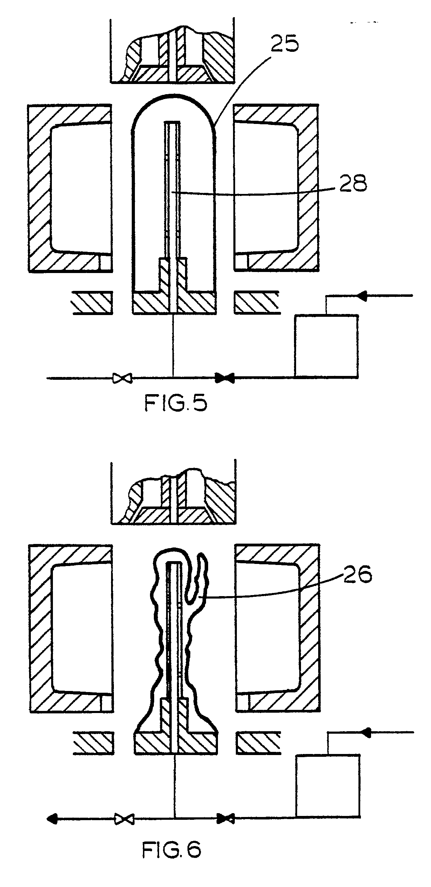

Figures 1 through 4 represent a number of process steps of an embodiment of the invention, the inner layer being an extruded parison and the outer one consisting of two flat films or one tubular film. Figures 5 through 8 represent a number of process steps of an embodiment of the process according to the invention in which the inner layer consists of a balloon-shaped, multilayer tubular film and the outer layer of a single-layer parison.

As a rule, in the drawings the reference figures of similar parts are mentioned only once. The figures in the drawings always have the same meaning.

In Figure 1, 1 is a mould comorising two mould halves 2 and 3, 4 is an extrusion die, of which 5 is the extrusion gap and 6 a mandrel controlled by means of spindle 7.

A device 8 comprises a fixed central part 9 and two movable parts 10 and 11. Through line 12, a pressurized medium, for instance air, is supplied to buffer vessel 13. If so desired, heated air can be supplied. Although, of course, it is also possible to supply cooled air, this is generally less desirable.

When valve 14 is opened, and valve 15 closed, this medium can be supplied, through lines 16 and 17, to an opening 18 in the central part 9 of clamping device 8.

When valve 14 is closed and valve 15 opened, medium present in cavity can be discharged through lines 17 and 19, and opening 18, and, optionally, an under-pressure relative to the atmosphere can be created.

Through opening 21 in spindle 8, which extends into mandrel 6, pressurized medium can also be supplied or a medium can be discharged from cavity 20.

Figures 2 through 8 represent the same device as Figure 1, except for support tube 28, which is provided with openings 29 (see Figures 5 through 8).

The embodiment of the process according to the invention of which a number of process steps are represented in Figures 1 through 4 is substantially carried out as follows:

First, outer layer 22 (see Fig. 1) is introduced into opened mould 1. Subsequently, extruder 4 introduces, in the direction of arrows 24, inner layer 23, in the form of a parison, into the opened mould (see Fig. 2). After this, inner layer 22 and outer layer 23 are compressed near their bottom edges 31 and 32 by clamping device 8 (see Fig. 3) and valve 14 is opened for such a period of time (see Fig. 4) that the pressurized medium, for instance compressed air, blows up the parison until the inner and the outer layer contact each other over virtually the entire area of their facing surfaces. Finally, mould halves 2 and 3 are moved towards each other, the mould is closed (not shown), and both layers are together forced against the inner wall of the mould by the pressurized medium. After cooling, the mould can be opened and the object removed from it.

The embodiment of the process according to the invention of which a number of process steps are represented in Figs. 5 through 8 is substantially carried out as follows:

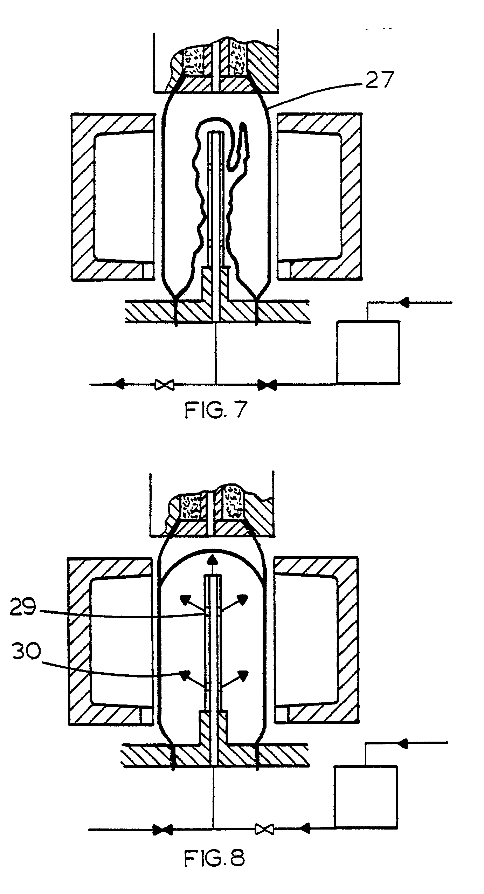

First, a balloon-shaped multilayer film 25 (see Fig. 5) is introduced into opened mould 1 and supported by central part 9 of clamping device 8. Subsequently, valve 15 is opened - valve 14 is closed - and the balloon volume is reduced by sucking off, through lines 17 and 19, of the medium in the balloon (usually air). 28 is a support tube for lateral support of the shrunken balloon 26 (see Fig. 6). Next, extruder 4 introduces a parison, shown in Fig. 7 by 27, into the opened mould, the bottom edge (not shown) of which is forced against the bottom edge (not shown) of which is forced against the bottom edge (not shown) of balloon shaped film 25 by device 8 (see Fig. 7).

After this, valve 15 is closed and valve 14 opened, so that the pressurized medium flows from buffer vessel 13 into the cavity of the balloon-shaped film (see Fig. 8).

When the shrunken balloon-shaped film 26 has been blown up to such an extent that it contacts outer layer 27 almost everywhere and both layers together are nicely tight, mould halves 2 and 3 are moved towards each other, mould 1 is closed and both layers are together forced against the inner wall of the mould, use being made of the pressurized medium.

The air between the inner layer and the outer layer can be discharged through opening 21.

It must be possible for the air between the mould halves and the two layers to escape in a way known to one skilled in the art.

Within the scope of the invention, various differentiations are possible. For example, for an optimum result it is not only desirable that pre-blowing, i.e. the contacting of the layers by means of a pressurized medium, e.g. air, and sealing them together prior to closing of the mould, occurs rapidly, in particular within a few seconds or less, but also that the layers are compressed with some force, in other words, that pre-blowing takes place under some presssure. To effect this in a suitable manner it may be desirable to surround the multi-layer parison by a supporting sleeve, so that at an elevated pre-blowing pressure the outer layer is forced against the supporting sleeve and thus retains its shape. By pre-blowing rapidly and under an elevated pressure, removal of air between the layers can be improved further.

The supporting sleeve can be of any desired shape and design and can consist of one element or of two or more connectable elements. The supporting sleeve can also be made of air-permeable material, so that it is not only possible to force the outer layer closely against it but the outer film can even be sucked against the supporting sleeve by applying a partial vacuum across the supporting sleeve and, if this outer film is perforated, the removal of air from between the two layers can even be improved furrther. Such a supporting sleeve can also be heatable, to effect an optimum seal between the outer and the inner layer.

It will be clear that when such a supporting sleeve is used the installation for conducting the process according to the invention must comprise means to remove the supporting sleeve after pre-blowing and before closing of the mould, so that afterwards the mould can be closed and the joined layers can be forced against the mould wall.

The introduction of a gaseous medium - generally air - in pre-blowing can also be done in various ways. Generally, it is desirable to start blowing at one point, so that the inner and the outer layer are forced against one another there, and then making the blowing point travel, resulting in a kind of unwinding of the two layers one against the other. This can be effected by, for example, injecting the blowing medium through a nozzle in a direction deviating from the normal to the axial direction. The axial direction is here understood to be the direction of extrusion as apparent from, for example, the figures. In particular at the central section 9 of Fig. 1 such a nozzle can be provided. If this nozzle is movable along an axis, it can move from bottom to top or the other way round while blowing in a direction deviating from the normal. A nozzle in the form of a turbine wheel is highly suitable. Anyone with average skill in the art can easily work out such a design. With such a device it is possible to force the inner layer against the outer layer at a place to be determined by the mechanism and then to make the layers contact one another progressively in a desired direction.

Thus, within the scope of the invention many embodiments are possible which are obvious to one skilled in the art on account of his technical knowledge and which he can easily work out.

## Claims

1. A process for the preparation of a multilayer plastic container, comprising the steps of:
(a) introducing a first inflatable plastic layer (23) or (25/26) between sections (2) and (3) of an opened container mold (1);
(b) introducing a second layer (22) or (27) between said sections (2) and (3) of the opened container mold (1) and surrounding said first layer (23) or (25/26), whereby a first outer surface of the first layer (23) or (25/26) faces a second inner surface of the second layer (22) or (26) and wherein one of said layers is in the melt phase, and is introduced by extrusion from a first point (5) above said mold (1);
followed by the subsequent steps of:
(c) mechanically clamping the first and second layers together at a second point (8) below said mold;
(d) inflating said first layer until said first and second layers are in contact over substantially all of said first and second surfaces, hereby sealing said first and second layers;
(e) closing the sections (2) and (3) of the mold around said first and second layers; and
(f) further inflating the first layer to force the first and second layers against the mold, whereby a multilayer plastic container is prepared.

2. A process according to claim 1, wherein one of said first and second layer is a multiply plastic film.

3. A process according to claim 1, wherein said step (d) of inflating further comprises evacuating a space between said first and second surfaces.

4. A process according to claim 1, wherein said step (a) comprises introducing a defleated belloon of a multilayer film.

5. A process according to claim 4, wherein step (a) further comprises providing means within the interior of the defleated balloon for at least partially supporting the same prior to inflation thereof.

## Patentansprüche

1. Verfahren zur Herstellung eines mehrschichtigen Kunststoffbehälters, umfassend die folgenden Schritte:
(a) Einführung einer ersten aufblasbaren Kunststoffschicht (23) oder (25/26) zwischen Abschnitte (2) und (3) einer geöffneten Behälterform (1);
(b) Einführung einer zweiten Schicht (22) oder (27) zwischen die Abschnitte (2) und (3) der geöffneten Behälterform (1) und Einschließen der ersten Schicht (23) oder (25/26), wodurch eine erste äußere Oberfläche der ersten Schicht (23) oder (25/26) einer zweiten inneren Oberfläche der zweiten Schicht (22) oder (26) gegenüberliegt und wobei eine der Schichten sich in der Schmelzphase befindet und durch Extrusion von einem ersten Punkt (5) über der Form (1) eingeführt wird;
gefolgt von den nachfolgenden Schritten:
(c) mechanisches Gegeneinanderklemmen der ersten und zweiten Schichten an einem zweiten Punkt (8) unterhalb der Form;
(d) Aufblasen der ersten Schicht, bis die ersten und zweiten Schichten über im wesentlichen die Gesamtheit der ersten und zweiten Oberflächen in Berührung sind, wodurch die ersten und zweiten Schichten verklebt werden;
(e) Schließen der Abschnitte (2) und (3) der Form um die ersten und zweiten Schichten und
(f) weiteres Aufblasen der ersten Schicht, um die ersten und zweiten Schichten gegen die Form zu pressen, wodurch ein Mehrschicht-Kunststoff-Behälter hergestellt wird.

2. Verfahren nach Anspruch 1, worin eine der ersten und zweiten Schichten eine aus mehreren Schichten bestehende Kunststoffolie ist.

3. Verfahren nach Anspruch 1, worin der Aufblasschritt (d) weiterhin das Evakuieren eines Raums zwischen den ersten und zweiten Oberflächen umfaßt.

4. Verfahren nach Anspruch 1, worin der Schritt (a) die Einführung eines entleerten Ballons aus einer Mehrschichtfolie umfaßt.

5. Verfahren nach Anspruch 4, worin der Schritt (a) weiterhin das Vorsehen von Mitteln im Innern des entleerten Ballons umfaßt, um denselben zumindest teilweise vor seinem Aufblasen zu stützen.

## Revendications

1. Un procédé pour la préparation d'un récipient en plastique multicouche comprenant les étapes consistant à:

(a) introduire une première couche de plastique gonflable (23) ou (25/26) entre des parties (2) et (3) d'un moule récipient ouvert (1);

(b) introduire une seconde couche (22) ou (27) entre lesdites parties (2) et (3) du moule récipient ouvert (1) et entourer ladite première couche (23) ou (25/26), ce qui a pour conséquence qu'une première surface externe de la première couche (23) ou (25/26) fait face à une seconde surface interne de la seconde couche (22) ou (26), et où l'une desdites couches est en fusion et est introduite par extension à partir d'un premier point (5) au dessus dudit moule (1);

suivit des étapes suivantes consistant à:

(c) serrer mécaniquement la première et la seconde couche ensemble en un second point (8) situé en dessous dudit moule;

(d) gonfler ladite première couche jusqu'à ce que lesdites première et seconde couche soient en contact sur substantiellement toute lesdites première et seconde surface scellant ainsi ladite première couche et ladite seconde couche;

(e) fermer les parties (2) et (3) du moule autour desdites première et seconde couche; et

(f) gonfler plus encore la première couche afin de comprimer la première et la seconde couche contre le moule, ce qui a pour conséquence de préparer un récipient en plastique multicouche.

2. Un procédé selon la revendication 1 dans lequel l'une desdites première et seconde couche est un film plastique multicouche.

3. Un procédé selon la revendication 1 dans lequel ladite étape (d) consistant à gonfler plus encore comprend le fait de vider un espace situé entre la première et la seconde surface.

4. Un procédé selon la revendication 1 dans lequel ladite étape (a) comprend le fait d'introduire un ballon dégonflé fabriqué en un film multicouche.

5. Un procédé selon la revendication 4 dans lequel l'étape (a) comprend en plus le fait de fournir des moyens à l'intérieur du ballon dégonflé pour le soutenir au moins partiellement avant de le gonfler.

FIG. 1

FIG. 2

FIG. 3

FIG. 4

FIG.5

FIG.6

FIG. 7

FIG. 8